# EUROPEAN PATENT APPLICATION

(11) **EP 4 823 169 A1**
(43) Date of publication of application: **14.10.2026**
(21) Application number: 24899863.5
(22) Date of filing: 04.12.2024
(51) Int. Cl.: H04W 28/06

(54) **COMMUNICATION METHOD, COMPUTER-READABLE STORAGE MEDIUM, AND COMMUNICATION APPARATUS**

(30) Priority: 08.12.2023 CN 202311687209
(71) Applicant: Beijing Unisoc Communications Technology Co., Ltd, Beijing 100083 (CN)
(72) Inventor: WANG, Hualei, Beijing 100083 (CN)
(74) Representative: Murgitroyd & Company
(86) International application number: PCT/CN2024/136798
(87) International publication number: WO 2025/119225

(57) **Abstract**

A communication method, a computer-readable storage medium, and a communication apparatus, relating to the technical field of communications. The method comprises: sending target channel information on an uplink resource, the target channel information being obtained on the basis of compression processing and/or first processing of a first model, and the first processing comprising pre-processing and/or post-processing. The use of the solution provided by the present application enables a first model deployed on a terminal device to be suitable for feedback of channel information of different sizes.

## Description

The present disclosure claims a priority to Chinese Patent Application No. 202311687209.5, filed with the China Patent Office on December 08, 2023, and titled "COMMUNICATION METHOD, COMPUTER-READABLE STORAGE MEDIUM, AND COMMUNICATION APPARATUS", the entire content of which is incorporated into herein by reference.

### TECHNICAL FIELD

The present disclosure relates to the field of communication technologies, and in particular, to a communication method, a computer readable storage medium, and a communication apparatus.

### BACKGROUND

Intelligence of wireless networks is an important evolution trend, and currently, the industry is widely discussing the introduction of intelligent models into communication systems, to support communication between a terminal device and a network device. As a typical application, an intelligent model may be introduced in an application scenario of channel state information (Channel State Information, CSI) feedback to support CSI compression and recovery, thereby reducing an overhead of CSI feedback from the terminal device while enabling the network device to acquire the CSI.

### SUMMARY

One of the technical objectives of embodiments of the present disclosure is to provide a communication method, a computer readable storage medium, and a communication apparatus, which may enable a first model deployed on a terminal device to be applicable to feedback of channel information of various different sizes.

In a first aspect, the embodiments of the present disclosure provide a communication method, and the method includes: sending target channel information on an uplink resource, where the target channel information is obtained based on compression processing and/or first processing of a first model, and the first processing includes: pre-processing and/or post-processing.

In the above solutions, a size of the channel information input to the first model is enabled to be matched with an input size of the first model through the pre-processing, and/or the channel information output by the first model is enabled to be matched with the uplink resource through the post-processing. Therefore, the first model deployed on the terminal device is enabled to be applicable to the feedback of channel information of various different sizes by the solutions provided in the embodiments of the present disclosure.

Optionally, the method further includes: receiving first indication information, where the first indication information includes: indication information of a manner of the pre-processing and/or indication information of a manner of the post-processing.

Optionally, the method further includes: sending second indication information, where the second indication information includes: indication information of a manner of the pre-processing and/or indication information of a manner of the post-processing.

Optionally, the second indication information is carried in a CSI part 1 of a channel state information (CSI) report.

Optionally, the manner of the pre-processing and/or the manner of the post-processing is predefined by a protocol.

Optionally, the manner of the pre-processing and/or the manner of the post-processing is determined based on a satisfied condition.

Optionally, the condition includes at least one of: a computing resource of the terminal device being greater than or equal to a first threshold; the computing resource of the terminal device being less than a second threshold; a time interval between a first time unit and a second time unit being greater than or equal to a third threshold, where the first time unit refers to: a transmission time unit or a measurement time unit of a reference signal for measuring channel information, and the second time unit is a sending time unit of the target channel information; or the time interval between the first time unit and the second time unit being less than a fourth threshold.

Optionally, the pre-processing is any one or more of following manners: performing adaptive processing on first channel information, to obtain the channel information input to the first model; performing truncation or padding on the first channel information, to obtain the channel information input to the first model; performing grouping on the first channel information based on a channel resource and/or an antenna port, to obtain the channel information input to the first model, where the channel information input to the first model includes a plurality of pieces of second channel information, and a size of each piece of second channel information is the input size; or adjusting a size of a channel resource corresponding to the first channel information, to obtain the channel information input to the first model.

Optionally, the post-processing is any one or more of following manners: performing adaptive processing on the channel information output by the first model, to obtain the target channel information, where a size of the target channel information is matched with a size of an uplink resource; performing truncation or padding on the channel information output by the first model, to obtain the target channel information; or discarding at least one piece of third channel information, to obtain the target channel information, where the channel information output by the first model includes a plurality of pieces of the third channel information.

Optionally, the post-processing is: discarding the at least one piece of third channel information according to priorities of the plurality of pieces of third channel information.

Optionally, the priorities of the plurality of pieces of third channel information are determined based on at least one of: index information of a channel resource corresponding to the third channel information; index information of an antenna port corresponding to the third channel information; or index information of a layer corresponding to the third channel information.

In a second aspect, the embodiments of the present disclosure provide a communication method, and the method includes: receiving target channel information on an uplink resource, where the target channel information is obtained based on compression processing and/or first processing of a first model, and the first processing includes: pre-processing and/or post-processing.

Optionally, the method further includes: sending first indication information, where the first indication information includes: indication information of a manner of the pre-processing and/or indication information of a manner of the post-processing.

Optionally, the method further includes: receiving second indication information, where the second indication information includes: indication information of a manner of the pre-processing and/or indication information of a manner of the post-processing.

Optionally, the second indication information is carried in a CSI part 1 of a channel state information (CSI) report.

Optionally, the manner of the pre-processing and/or the manner of the post-processing is predefined by a protocol.

Optionally, the manner of the pre-processing and/or the manner of the post-processing is determined based on a satisfied condition.

Optionally, the condition includes at least one of: a computing resource of the terminal device being greater than or equal to a first threshold; the computing resource of the terminal device being less than a second threshold; a time interval between a first time unit and a second time unit being greater than or equal to a third threshold, where the first time unit refers to: a transmission time unit or a measurement time unit of a reference signal for measuring channel information, and the second time unit is a sending time unit of the target channel information; or the time interval between the first time unit and the second time unit being less than a fourth threshold.

Optionally, the pre-processing is any one or more of following manners: performing adaptive processing on first channel information, to obtain the channel information input to the first model; performing truncation or padding on the first channel information, to obtain the channel information input to the first model; performing grouping on the first channel information based on a channel resource and/or an antenna port, to obtain the channel information input to the first model, where the channel information input to the first model includes a plurality of pieces of second channel information, and a size of each piece of second channel information is the input size; or adjusting a size of a channel resource corresponding to the first channel information, to obtain the channel information input to the first model.

Optionally, the post-processing is any one or more of following manners: performing adaptive processing on the channel information output by the first model, to obtain the target channel information, where a size of the target channel information is matched with a size of an uplink resource; performing truncation or padding on the channel information output by the first model, to obtain the target channel information; or discarding at least one piece of third channel information, to obtain the target channel information, where the channel information output by the first model includes a plurality of pieces of the third channel information.

Optionally, the post-processing is: discarding the at least one piece of third channel information according to priorities of the plurality of pieces of third channel information.

Optionally, the priorities of the plurality of pieces of third channel information are determined based on at least one of the following: index information of a channel resource corresponding to the third channel information; index information of an antenna port corresponding to the third channel information; or index information of a layer corresponding to the third channel information.

In a third aspect, the embodiments of the present disclosure provide a communication apparatus, and the apparatus includes: a sending module, configured to send target channel information on an uplink resource, where the target channel information is obtained based on compression processing and/or first processing of a first model, and the first processing includes: pre-processing and/or post-processing.

In a fourth aspect, the embodiments of the present disclosure provide a communication apparatus, and the apparatus includes: a receiving module, configured to send target channel information on an uplink resource, where the target channel information is obtained based on compression processing and/or first processing of a first model, and the first processing includes: pre-processing and/or post-processing.

In a fifth aspect, the embodiments of the present disclosure further provide a computer readable storage medium, the computer readable storage medium has stored a computer program thereon, and the computer program, upon being executed by a computer, performs the steps of the communication method provided in the first aspect or the second aspect.

In a sixth aspect, the embodiments of the present disclosure further provide a communication apparatus, including a memory and a processor, the memory stores a computer program thereon that is executable on the processor, and the processor, upon executing the computer program, performs the communication method provided in the first aspect.

In a seventh aspect, the embodiments of the present disclosure further provide a communication apparatus, including a memory and a processor, the memory stores a computer program thereon that is executable on the processor, and the processor, upon executing the computer program, performs the communication method provided in the second aspect.

In an eighth aspect, the embodiments of the present disclosure provide a chip (or a communication apparatus), the chip stores a computer program thereon, and the computer program, upon being executed by the chip, enables the method provided in the first aspect or the second aspect to be performed.

In a ninth aspect, the embodiments of the present disclosure provide a chip module, the chip module stores a computer program thereon, and the computer program, upon being executed by the chip module, enables the method provided in the first aspect or the second aspect to be performed.

In a tenth aspect, the embodiments of the present disclosure provide a computer program product, and the computer program product includes a computer program, and the computer program, upon being executed on a computer, enables the computer to perform the method provided in the first aspect or the second aspect.

In an eleventh aspect, the embodiments of the present disclosure provide a communication system, and the communication system includes an apparatus for performing the communication method provided in the first aspect and an apparatus for performing the communication method provided in the second aspect.

### BRIEF DESCRIPTION OF THE DRAWINGS

FIG. 1 is a schematic diagram of an application scenario of a communication method of the embodiments of the present disclosure;
FIG. 2 is a schematic flowchart of a communication method of the embodiments of the present disclosure;
FIG. 3 is a schematic diagram of a generation process of target channel information of the embodiments of the present disclosure;
FIG. 4 is a schematic diagram of signaling interaction of a first communication method of the embodiments of the present disclosure;
FIG. 5 is a schematic diagram of signaling interaction of a second communication method of the embodiments of the present disclosure;
FIG. 6 is a schematic diagram of signaling interaction of a third communication method of the embodiments of the present disclosure;
FIG. 7 is a schematic diagram of signaling interaction of a fourth communication method of the embodiments of the present disclosure;
FIG. 8 is a structural schematic diagram of a communication apparatus of the embodiments of the present disclosure;
FIG. 9 is a structural schematic diagram of another communication apparatus of the embodiments of the present disclosure; and
FIG. 10 is a schematic diagram of a hardware architecture of a communication apparatus of the embodiments of the present disclosure.

### DETAILED DESCRIPTION

It should be understood that, "and/or" appearing in the embodiments of the present disclosure is an association relationship for describing associated objects, which represents that there may be three kinds of relationships, for example, A and/or B may represent three cases as follows: A exists alone, both A and B exist, and B exists alone. In addition, the character "/" herein represents an "or" relationship between the associated objects.

"At least one" appearing in the embodiments of the present disclosure refers to one or more. "A plurality of/ multiple" appearing in the embodiments of the present disclosure refers to two or more.

Descriptions such as first, second, etc. appearing in the embodiments of the present disclosure are merely used to illustrate and distinguish the described objects, without any order or do not represent any particular limitation on a number of devices in the embodiments of the present disclosure, and shall not constitute any limitation on the embodiments of the present disclosure.

A communication system applicable to the embodiments of the present disclosure include, but is not limited to, a long term evolution (LTE) system, a fifth generation (5th-generation, 5G) system (such as a new radio (New Radio, NR) system), and future evolution systems or a plurality of communication fusion systems. Herein, the 5G system may be a non-standalone (NSA) 5G system or a standalone (SA) 5G system. The solutions of the embodiments of the present disclosure may also be applicable to future new communication systems, for example, a sixth generation (6th generation, 6G) communication system, etc.

The present disclosure mainly involves with communication between a terminal device and a network device. The network device may be a network device in non-terrestrial network (Non-Terrestrial Networks, NTN) communication, or may also be a network device in a terrestrial network communication system.

A part of terms in the embodiments of the present disclosure is first explained below.

### 1. Terminal device

A terminal device (Terminal Equipment) in the embodiments of the present disclosure may refer to a user equipment (User Equipment, UE), an access terminal, a subscriber unit, a subscriber station, a mobile station, a mobile platform (Mobile Station, MS), a remote station, a remote terminal, a mobile device, a subscriber terminal, a wireless communication device, a subscriber agent, a subscriber apparatus, or etc. For example, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or other processing devices connected to a wireless modem, a vehicle-mounted device, a wearable device, a terminal in a future 5G network, or a terminal device in a future evolved public land mobile communication network (Public Land Mobile Network, PLMN), etc., which is not limited to the embodiments of the present disclosure. In some embodiments of the present disclosure, the terminal device may be an electronic device with a data wireless transmission function. In some other embodiments of the present disclosure, the terminal device may also be an apparatus with a transceiving function, such as a chip system. Herein, the chip system may include a chip, and may further include other discrete devices.

### 2. Network device

A network device in the embodiments of the present disclosure may refer to a device that provides a wireless communication function for the terminal device, and the network device may be referred to as an access network device, such as a radio access network (RAN) device, or an access network element, etc. Herein, the network device may support at least one wireless communication technology, such as LTE, NR, etc. For example, the network device may be a base station (BS) (also may be referred to as a base station device), a base transceiver station (BTS), a Node B, an evolved NodeB (eNB), a device providing a function of the base station in a 5G network, such as a next generation node (next generation nodeB, gNB) and a further evolved nodeB (ng-eNB), where the gNB and the terminal device communicate by adopting an NR technology, the ng-eNB and the terminal device communicate by adopting an evolved universal terrestrial radio access (Evolved Universal Terrestrial Radio Access, E-UTRA) technology, and both the gNB and the ng-eNB may be connected to a 5G core network. In wireless local area networks (WLAN), a device providing a function of the base station is an access point (AP). The network device in the embodiments of the present disclosure also contains devices that provide a wireless communication function in future new communication systems, etc. In some embodiments, the network device may also be an apparatus for providing a wireless communication function for the terminal device, such as a chip system. Exemplarily, the chip system may include a chip, and may further include other discrete devices.

In some embodiments, the network device may refer to a centralized unit (CU) of the base station, or a distributed unit (Distributed Unit, DU) of the base station, or a CU control plane (CU-CP) of the base station, or a DU user plane (cu-up) of the base station, etc.

### 3. Channel information

Channel information in the embodiments of the present disclosure may be used for characterizing a channel feature or a channel characteristic. For example, the channel information may be channel matrix information and/or CSI and/or a channel eigenvector. Alternatively, the channel information may also be a CSI report. Yet alternatively, the channel information may also be time-domain information, frequency-domain information, time-frequency domain information of a channel, or delay-Doppler domain channel information, etc., which is not limited to the embodiments of the present disclosure.

Herein, the channel matrix information may refer to information used for describing a related channel matrix. For example, the channel matrix information may include at least one of: a channel matrix H, an equivalent channel matrix, a precoding matrix W (the precoding matrix W may be derived from the channel matrix H), a right singular vector V of the channel matrix H, an eigenvector vi of a square matrix HTH, a vector associated with the channel matrix H (for example, a vector of the channel matrix H under a certain transformation), etc.

Herein, the CSI may refer to information used for describing a related channel quality. For example, the CSI describes a propagation process of a wireless signal between a transmitter and a receiver, containing influences of distance, scattering, fading, etc. on the signal. For a downlink transmission, the CSI may be used for the terminal device to feed back downlink channel quality to the network device, so that the network device performs processing such as beam management, mobility management, etc. according to the CSI. The CSI sent from the terminal device to the network device may be carried in a CSI report. For example, the CSI may also include at least one of: a channel state information-reference signal resource indicator index (channel state information channel state information reference signal resource indicator, CRI), a rank indicator index (rank indicator, RI), a channel quality indicator index (channel quality indicator, CQI), a precoding matrix indicator index (precoding matrix indicator, PMI), a layer indicator index (layer indicator, LI), layer 1-reference signal received power (layer 1-reference signal receiving power layer indicator, L1-RSRP), layer 1-signal to interference plus noise ratio (L1-SINR) or a time-domain channel property (time-domain channel properties, TDCP), etc.

### 4. First channel information

In the solutions of the embodiments of the present disclosure, first channel information may refer to channel information obtained by the terminal device performing channel measurement through a downlink reference signal. Herein, the measurement may also be described as evaluation, detection, estimation, or etc. Herein, the downlink reference signal may be at least one of: a channel state information-reference signal (channel state information channel state information-reference signal, CSI-RS), a synchronization signal block (SSB), a physical broadcast channel demodulation reference signal (physical broadcast channel block demodulation reference signal, PBCH DMRS), a positioning reference signal (Positioning Reference Signal, PRS), etc.

Exemplarily, the terminal device may perform downlink channel measurement based on the CSI-RS, to obtain the first channel information.

### 5. First model

In the solutions of the embodiments of the present disclosure, a first model may refer to an artificial intelligence (Artificial Intelligence, AI) model or a machine learning (Machine Learning, ML) model. Exemplarily, the model may include a supervised learning model, an unsupervised learning model, a reinforcement learning model, a neural network model, etc. In a scenario of channel information feedback, the first model may be used to compress channel information.

Specific embodiments of the present disclosure are explained in detail below with reference to the drawings.

It should be noted that, actions performed by the network device herein may be performed by the network device, an apparatus in the network device (for example, a processor, a chip), a chip, etc., and actions performed by the terminal device may be performed by the terminal device, an apparatus in the terminal device (for example, a processor, a chip), a chip, etc., which is not limited to the present disclosure. For ease of description, the embodiments provided in the present disclosure are illustrated herein by taking as an example in which execution entities are the network device and the terminal device.

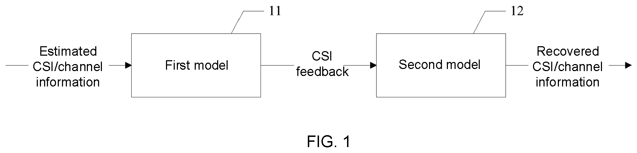

Referring to FIG. 1, FIG. 1 is a schematic diagram of an application scenario of a communication method of the embodiments of the present disclosure.

As shown in FIG. 1, a first model 11 may be deployed in the terminal device, and the terminal device, may perform channel estimation based on a downlink reference signal, and then use the first model 11, to perform compression on estimated CSI/channel information. Herein, the first model 11 may also be referred to as a compression model, and the first model 11 may be used to perform compression processing on the CSI/channel information. Further, the terminal device may feed back the compressed CSI to the network device. A second model 12 corresponding to the first model 11 may be deployed in the network device. The network device, after receiving the compressed CSI, may use the second model 12 to recover the compressed CSI. Herein, the second model 12 may also be referred to as a recovery model, and the second model 12 may be used to perform recovery processing on the compressed CSI. In this way, not only an overhead of CSI feedback from the terminal device can be effectively reduced, but also the network device can acquire high-precision CSI. Herein, the above 12 may also be an AI model or an ML model.

In the solutions of the embodiments of the present disclosure, considering that a size of input data and a size of output data of the AI model or the ML model are usually fixed, however, in different cases, a size of the channel information estimated by the terminal device may be inconsistent with the size of input data of the first model 11, or the output data of the first model 11 may not match the uplink resource for channel information feedback, etc.

In view of this, the embodiments of the present disclosure provide a communication method, and in the solutions of the embodiments of the present disclosure, target channel information is sent on an uplink resource, the target channel information is obtained based on compression processing and first processing of a first model, where the first processing includes: pre-processing and/or post-processing. Specifically, the pre-processing may be used to adapt channel information input to the first model to an input size of the first model, and/or the post-processing may be used to match a size of the channel information output by the first model with a size of the uplink resource. Thus, in the solutions of the embodiments of the present disclosure, the size of the channel information input to the first model is matched with the input size of the first model through the pre-processing, and/or the channel information output by the first model is matched with the uplink resource through the post-processing. Therefore, the first model deployed on the terminal device is enabled to be applicable to feedback of channel information of various different sizes through the solutions provided by the embodiments of the present disclosure.

### Embodiment I

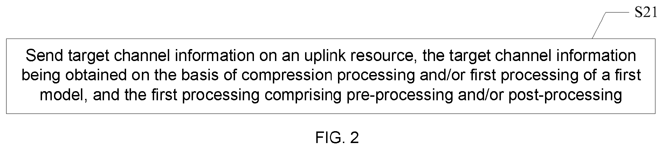

Referring to FIG. 2, FIG. 2 is a schematic flowchart of a communication method of the embodiments of the present disclosure. The method shown in FIG. 2 may be applied to a terminal device. The method shown in FIG. 2 may include S21.

In S21, target channel information is sent on an uplink resource, where the target channel information is obtained based on compression processing and/or first processing of a first model; and the first processing includes: pre-processing and/or post-processing.

Herein, the pre-processing may be used for adapting channel information input to the first model to an input size of the first model, and/or the post-processing may be used for matching a size of the channel information output by the first model with a size of the uplink resource.

Specifically, the terminal device may send the target channel information to the network device on the uplink resource. It should be noted that, "target channel information" in the embodiments of the present disclosure refers to channel information sent or fed back by the terminal device to the network device, and the uplink resource refers to an uplink resource used for carrying the target channel information, where the uplink resource may be a resource pre-configured by the network device and/or a resource configured by scheduling of the network device.

Herein, the target channel information may be obtained by performing compression processing and first processing on first channel information, where the first processing includes pre-processing and/or post-processing.

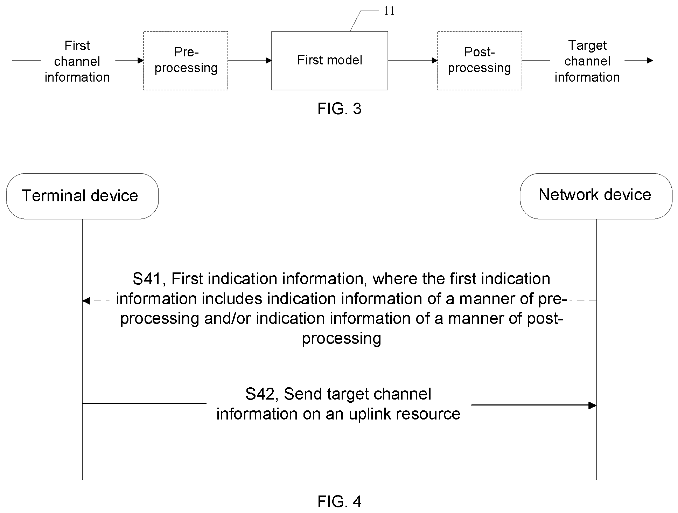

Referring to FIG. 3, FIG. 3 is a schematic diagram of a generation process of target channel information of the embodiments of the present disclosure. The pre-processing and the post-processing in the embodiments of the present disclosure are exemplarily described below with reference to FIG. 2 and FIG. 3.

Considering the diversity of parameter configurations, a size of the first channel information obtained by the terminal device through estimation is variable, but an input size of the first model is fixed. Therefore, in the solutions of the embodiments of the present disclosure, if the size of the first channel information is inconsistent with the input size of the first model, the first channel information is required to be pre-processed, so that the size of the channel information input to the first model adapts to the input size of the first model. Herein, the size of the channel information input to the first model adapting to the input size of the first model may refer to that the size of the channel information input to the first model is consistent with the input size of the first model.

It should be noted that the pre-processing is an optional step.

It should also be noted that, the input size of the first model in the embodiments of the present disclosure may refer to at least one of: a number of rows and/or columns of an input matrix of the first model, a data amount of input data of the first model, a length of the input data of the first model, a number of channel resources corresponding to the input data of the first model, a number of antenna ports corresponding to the input data of the first model, a time-domain width corresponding to the input data of the first model, a frequency-domain width corresponding to the input data of the first model, a rank corresponding to the input data of the first model, a number of data streams corresponding to the input data of the first model, a number of layers corresponding to the input data of the first model, etc., a number of data samples of the input data of the first model, a number of bits/bytes of the input data of the first model, etc. It can be understood that, a data sample may be a floating point, or may be a fixed point, or may be a matrix, or may be a tensor, or may be a vector, or may be a scalar, etc. It can be understood that, a data sample may correspond to channel information corresponding to a channel resource. It should be noted that, the above is only an exemplary description of "data sample", and "data sample" may also adopt other definitions or interpretations, and the definition of "data sample" is not limited herein. For example, "data sample" may be adaptively modified based on modifications or changes of the protocol, or the "data sample" may be adaptively modified based on the definition or content or interpretation of "channel information", and the modified content also falls within the protection scope claimed by the present disclosure.

It should be noted that, the above is only an exemplary description of "input size of the first model", and "input size of the first model" may also adopt other definitions or interpretations. The meaning of "input size of the first model" is not limited to the embodiments of the present disclosure. For example, the "input size of the first model" may be adaptively modified based on modifications or changes of the protocol, or "input size of the first model" may be adaptively modified based on the definition or content or interpretation of "channel information", and the modified content also falls within the protection scope claimed by the present disclosure.

Herein, the channel resource herein may be a subcarrier, or may also be a resource block, or may further be a subband, or may further be an antenna port, etc., which is not limited to the present embodiment. The antenna port herein may refer to a sending antenna port and/or a receiving antenna port.

In the solution of the present embodiment, the terminal device may perform pre-processing in any one of manners of Manner 1 to Manner 4, but is not limited to the manners described below. That is, the pre-processing may at least have the following several optional manners or types, but are not limited thereto.

Manner 1: adaptive processing.

Specifically, the terminal device may perform adaptive processing on first channel information, to obtain the channel information input to the first model. That is, through the adaptive processing, the first channel information is converted into channel information conforming to the input size of the first model.

In an example, the adaptive processing may be performed on a quantization granularity of the first channel information, so that a size of the processed channel information is consistent with the input size of the first model.

Manner 2: truncation processing or padding processing.

Specifically, if the size of the first channel information is greater than the input size of the first model, the terminal device may perform truncation on the first channel information, so that the size of the truncated first information is consistent with the input size of the first model.

If the size of the first channel information is less than the input size of the first model, the terminal device may perform padding on the first channel information, so that the size of the padded first information is consistent with the input size of the first model. Herein, the manner of the padding may be zero padding.

Manner 3: grouping processing.

In a first implementation, the terminal device may group the first channel information based on the channel resource, to obtain the channel information input to the first model, where the channel information input to the first model includes one or more pieces of second channel information, and a size of each piece of second channel information is the input size of the first model. That is, the terminal device may group the first channel information according to the channel resource, to obtain one or more pieces of second channel information. A number of pieces of the second channel information may depend on a number of channel resources corresponding to the first channel information and a number of channel resources corresponding to the input data of the first model.

Specifically, the terminal device may group the first channel information according to the channel resource. Specifically, assume that the first channel information corresponds to M channel resources, that is, the first channel information contains channel information of M channel resources, and a number of channel resources corresponding to the input data of the first model is X, the first channel information may be divided into $\left⌈M/X\right⌉$ pieces of second channel information, where ┌ ┐ represents rounding up, and both M and X are positive integers. In an example, M may be greater than X, a channel resource corresponding to each piece of second channel information is a part of the channel resources corresponding to the first channel information, and channel resources corresponding to different pieces of second channel information are different. In other examples, M may also be equal to X, or M may be less than X. In a case where M is less than X or M is equal to X, the number of pieces of the second channel information may be 1.

In a second implementation, the terminal device may group the first channel information based on the antenna port, to obtain the channel information input to the first model, where the channel information input to the first model includes one or more pieces of second channel information, and a size of each piece of second channel information is the input size of the first model. That is, the terminal device may group the first channel information according to the antenna port, to obtain one or more pieces of second channel information. A number of pieces of the second channel information may depend on a number of antenna ports corresponding to the first channel information and a number of antenna ports corresponding to the input data of the first model.

Specifically, the terminal device may group the first channel information according to the antenna port. Specifically, assume that the first channel information corresponds to N antenna ports, that is, the first channel information contains channel information of N antenna ports, and a number of antenna ports corresponding to the input data of the first model is Y, the first channel information may be divided into $\left⌈N/Y\right⌉$ pieces of second channel information, where ┌┐ represents rounding up, and both N and Y are positive integers. In an example, N may be greater than Y, an antenna port corresponding to each piece of second channel information is a part of the antenna ports corresponding to the first channel information, and antenna ports corresponding to different pieces of second channel information are different. In other examples, N may also be equal to Y, or N may be less than Y. In a case where N is less than Y or N is equal to Y, the number of pieces of the second channel information may be 1.

In a third implementation, the terminal device may group the first channel information based on the channel resource and the antenna port, to obtain the channel information input to the first model, where the channel information input to the first model includes one or more pieces of second channel information, and a size of each piece of second channel information is the input size of the first model. A number of pieces of the second channel information may depend on a number of channel resources corresponding to the first channel information, a number of antenna ports corresponding to the first channel information, a number of channel resources corresponding to the input data of the first model, and a number of antenna ports corresponding to the input data of the first model.

Specifically, the terminal device may group the first channel information according to the antenna port and the channel resource. Specifically, assume that the first channel information corresponds to M channel resources and N antenna ports, that is, the first channel information contains channel information of N antenna ports and M channel resources, and a number of channel resources corresponding to the input data of the first model is X' and a number of antenna ports corresponding to the input data of the first model is Y', the first channel information may be divided into $\left(\left⌈M/X′\right⌉\times \left⌈N/Y′\right⌉\right)$ pieces of second channel information, where M, N, X', and Y' are all positive integers. M may be greater than X', or M may be equal to X', or M may be less than X', and/or N may be greater than Y', or N may be equal to Y', or N may be less than Y'.

Manner 4: adjust a size of a channel resource.

Specifically, the terminal device may adjust a size of a channel resource corresponding to the first channel information, to obtain the channel information input to the first model. That is, by adjusting the size of the channel resource corresponding to the first channel information, the first channel information is converted into channel information conforming to the input size of the first model.

For example, assume that a bandwidth of a single channel resource corresponding to the first channel information is a first width, the terminal device may adjust the bandwidth of the single channel resource to a second width, so that a number of channel resources corresponding to the first channel information is consistent with a number of channel resources corresponding to the input data of the first model.

In addition, considering the diversity of resource configurations, the size of the uplink resource used for feeding back channel information is variable, but an output size of the first model is fixed. Therefore, in the solutions of the embodiments of the present disclosure, if the size of the channel information output by the first model does not match the size of the uplink resource, the channel information output by the first model is required to be post-processed, so that the size of the target channel information obtained through the post-processing matches the size of the uplink resource. Herein, the size of the target channel information matching the size of the uplink resource may refer to that the uplink resource may accommodate the target channel information.

It should be noted that, the post-processing is an optional step.

It should also be noted that, the output size of the first model in the embodiments of the present disclosure may refer to at least one of: a number of rows and/or columns of an output matrix of the first model, a data amount of output data of the first model, a length of the output data of the first model, a number of channel resources corresponding to the output data of the first model, a number of antenna ports corresponding to the output data of the first model, a time-domain width corresponding to the output data of the first model, a frequency-domain width corresponding to the output data of the first model, a rank corresponding to the output data of the first model, a number of data streams corresponding to the output data of the first model, a number of layers corresponding to the output data of the first model, etc., a number of data samples of the output data of the first model, a number of bits/bytes of the output data of the first model, etc. It can be understood that, a data sample may be a floating point, or may be a fixed point, or may be a matrix, or may be a tensor, or may be a vector, or may be a scalar, etc. It can be understood that, a data sample may correspond to channel information corresponding to a channel resource. It should be noted that, the above is only an exemplary description of "data sample", and "data sample" may also adopt other definitions or interpretations, and the definition of "data sample" is not limited herein. For example, "data sample" may be adaptively modified based on modifications or changes of the protocol, or the "data sample" may be adaptively modified based on the definition or content or interpretation of "channel information", and the modified content also falls within the protection scope claimed by the present disclosure.

It should be noted that, the above is only an exemplary description of "output size of the first model", and the "output size of the first model" may also adopt other definitions or interpretations. The meaning of "output size of the first model" is not limited to the embodiments of the present disclosure. For example, the "output size of the first model" may be adaptively modified based on modifications or changes of the protocol, or the "output size of the first model" may be adaptively modified based on the definition or content or interpretation of "channel information", and the modified content also falls within the protection scope claimed by the present disclosure.

In the solution of the present embodiment, the terminal device may perform the post-processing in any one of manners of Manner a to Manner c, but is not limited to the manners described below.

Manner a: adaptive processing.

Specifically, the terminal device may perform adaptive processing on the channel information output by the first model, to obtain target channel information.

In an example, the adaptive processing may be performed on a quantization granularity of the channel information output by the first model, to obtain the target channel information.

Manner b: truncation processing or padding processing.

Specifically, if the size of the channel information output by the first model is greater than a data amount that may be carried by the uplink resource, the terminal device may perform truncation on the channel information output by the first model, to obtain the target channel information. If the size of the channel information output by the first model is less than the data amount that may be carried by the uplink resource, the terminal device may perform padding on the channel information output by the first model, to obtain the target channel information. Herein, the manner of the padding may be zero padding.

Manner c: discarding processing.

Specifically, if the size of the channel information output by the first model is greater than the data amount that may be carried by the uplink resource, the terminal device may discard at least a part of the channel information output by the first model, to obtain the target channel information.

It should be noted that, different from the truncation processing described above, the discarding processing may be selectively discarding a part of the channel information, for example, the discarding processing may be performed based on priorities of the channel information.

In an example, in the pre-processing, the terminal device performs grouping processing on the first channel information, to obtain a plurality of pieces of second channel information. Assume that a number of pieces of the second channel information is K, the K pieces of second channel information are respectively input to first model 11, and the K pieces of third channel information may be obtained. That is, channel information output by the first model 11 may include the K pieces of third channel information, and there may be a one-to-one correspondence between the third channel information and the second channel information. K is a positive integer greater than 1. In the post-processing, at least one piece of third channel information may be discarded, to obtain the target channel information. For example, the discarding may be performed according to priorities of the third channel information, for example, the lower the priority, the earlier it is discarded.

The priorities of the third channel information are exemplarily described below. Herein, the priorities of the third channel information may be consistent with priorities of the second channel information corresponding to the third channel information.

Specifically, the priorities of the third channel information may be determined based on at least one of: index information of the channel resource corresponding to the third channel information or index information of the antenna port corresponding to the third channel information. Herein, the channel resource corresponding to the third channel information may be consistent with the channel resource corresponding to the second channel information; and the antenna port corresponding to the third channel information may be consistent with the antenna port corresponding to the second channel information.

In a first example, the priorities of the third channel information may be determined only based on the index information of the channel resource corresponding to the third channel information. Herein, the smaller the index information of the channel resource, the higher the priority of the third channel information, or, the larger the index information of the channel resource, the higher the priority of the third channel information.

In a second example, the priorities of the third channel information may be determined only based on the index information of the antenna port corresponding to the third channel information. Herein, the smaller the index information of the antenna port, the higher the priority of the third channel information, or, the larger the index information of the antenna port, the higher the priority of the third channel information.

In a third example, the priorities of the third channel information may be determined based on the index information of the channel resource and the index information of the antenna port corresponding to the third channel information.

Exemplarily, Formula (1) or Formula (2) may be adopted, to determine the priorities of the third channel information. $f \left(i, j\right) = P \times i + j$ Formula (1) $f \left(i, j\right) = Q \times j + i$ Formula (2)

Herein, *f*(*i, j*) represents the priority of the third channel information, *i* represents the index information of the channel resource corresponding to the third channel information, *j* represents the index information of the antenna port corresponding to the third channel information, Q represents a number of pieces of the third channel information corresponding to a channel resource dimension when the first channel information is grouped based on the channel resources, and P represents a number of pieces of the third channel information corresponding to an antenna port dimension when the first channel information is grouped based on the antenna ports. Specifically, Q in Formula (1) or Formula (2) may be the above $\left⌈M/X\right⌉$ or $\left⌈M/X′\right⌉$, and P may be the above $\left⌈N/Y\right⌉$ or $\left⌈N/Y′\right⌉$.

In an embodiment, the first model may be a layered processing model, and the priorities of the third channel information may be determined by adopting the method described above. Alternatively, in a case where the first model may be a layered processing model, the priorities of the third channel information may also be determined based on index information of layers corresponding to the third channel information. Herein, the index information of the layers corresponding to the third channel information may be consistent with index information of layers corresponding to the second channel information.

In a fourth example, the priorities of the third channel information may be determined only based on the index information of the layers corresponding to the third channel information. Herein, the smaller the index information of the layer, the higher the priority of the third channel information, or, the larger the index information of the layer, the higher the priority of the third channel information.

In a fifth example, the priorities of the third channel information may be determined based on the index information of the layers and the index information of the channel resources corresponding to the third channel information.

Exemplarily, Formula (3) or Formula (4) may be adopted, to determine the priorities of the third channel information. $f \left(i, l\right) = P \times i + l$ Formula (3) $f \left(i, l\right) = R \times l + i$ Formula (4)

In Formula (3) or Formula (4), *f*(*i,l*) represents the priority of the third channel information, *l* represents the index information of the channel resource corresponding to the third channel information, *i* represents the index information of the layer corresponding to the third channel information, and R represents a total number of layers corresponding to the first channel information, or R represents a rank of the first channel information. P represents a number of pieces of the third channel information corresponding to the channel resource dimension when the first channel information is grouped based on the channel resources. Specifically, P in Formula (3) may be the above $\left⌈M/X\right⌉$ or $\left⌈M/X′\right⌉$*.*

In a sixth example, the priorities of the third channel information may be determined based on the index information of the layer and the index information of the antenna port corresponding to the third channel information.

Exemplarily, Formula (5) or Formula (6) may be adopted, to determine the priorities of the third channel information. $f \left(j, l\right) = Q \times j + l$ Formula (5) $f \left(j, l\right) = R \times l + j$ Formula (6)

In Formula (5) or Formula (6), *f*(*j,l*) represents the priority of the third channel information, *l* represents the index information of the antenna port corresponding to the third channel information, *j* represents the index information of the layer corresponding to the third channel information, and R represents a total number of layers corresponding to the first channel information, or R represents a rank of the first channel information. Q represents a number of pieces of the third channel information corresponding to the antenna port dimension when the first channel information is grouped based on the antenna ports. Specifically, Q in Formula (5) may be the above $\left⌈N/Y\right⌉$ or $\left⌈N/Y′\right⌉$*.*

In a sixth example, the priorities of the third channel information may be determined based on the index information of the layer, the index information of the channel resource, and the index information of the antenna port corresponding to the third channel information.

Exemplarily, Formula (7) may be adopted, to determine the priorities of the third channel information. $f \left(i, j, l\right) = R \times Q \times i + R \times j + l$ Formula (7)

**In** Formula (7), *f*(*i, j, l*) represents the priority of the third channel information, *i* represents the index information of the channel resource corresponding to the third channel information, j represents the index information of the antenna port corresponding to the third channel information, *l* represents the index information of the layer corresponding to the third channel information, and R represents a total number of layers corresponding to the first channel information, or R represents a rank of the first channel information. Q represents a number of pieces of the third channel information corresponding to the antenna port dimension when the first channel information is grouped based on the antenna ports. Specifically, Q in Formula (7) may be the above $\left⌈N/Y\right⌉$ or $\left⌈N/Y′\right⌉$.

From the above, in the solution of Embodiment I, the size of the channel information input to the first model is matched with the input size of the first model through the pre-processing, and/or the channel information output by the first model is matched with the uplink resource through the post-processing. Thereby, the first model deployed on the terminal device is enabled to be applicable to feedback of channel information of various different sizes.

It should be noted that, in a specific implementation, the pre-processing and/or post-processing performed by the terminal device (that is, the manner of the pre-processing and the manner of the post-processing adopted by the terminal device) may be defined by a protocol, or may be indicated by the network device, or may be determined by the terminal device itself.

For more contents about Embodiment I, reference may be made to relevant descriptions about other embodiments herein, which will not be repeated herein.

### Embodiment II

Referring to FIG. 4, FIG. 4 is a schematic diagram of signaling interaction of a first communication method of the embodiments of the present disclosure. As shown in FIG. 4, the method shown in FIG. 4 may include S41 and S42.

In S41, a network device sends first indication information to a terminal device, where the first indication information includes indication information of a manner of the pre-processing and/or indication information of a manner of the post-processing. Correspondingly, the terminal device receives the first indication information.

In a specific implementation, the first indication information may be carried in downlink control information, a medium access control-control element (MAC CE) signaling, or radio resource control (RRC), but is not limited thereto.

Specifically, S41 may be performed in a functionality identification (Functionality identification) process or in a model identification process, but is not limited thereto. In the solution of the embodiments of the present disclosure, the first indication information may be used for instructing to the terminal device which manner of the pre-processing to perform and/or instructing to the terminal device which manner of the post-processing to perform. The terminal device may determine the manner of the pre-processing and/or the manner of the post-processing to be adopted during subsequent channel information feedback based on the first indication information.

It should be noted that, the "manner of the pre-processing" in the embodiments of the present disclosure may also be referred to as "type of the pre-processing", and the "manner of the post-processing" may also be referred to as "type of the post-processing".

It should also be noted that, S41 is an optional step.

In S42, the terminal device sends target channel information to the network device on an uplink resource. Correspondingly, the network device receives the target channel information on the uplink resource.

From the above, in the solution of Embodiment II, the network device indicates the manner of the pre-processing and/or the manner of the post-processing to the terminal device through the first indication information, and the terminal device determines the manner of the pre-processing and/or the manner of the post-processing based on the indication of the network device. The manner of the pre-processing and/or the manner of the post-processing adopted by the terminal device is visible to the network device, thereby, the network device, after receiving the target channel information, may perform processing on the target channel information by adopting a corresponding processing manner, to implement recovery of the channel information.

For more contents about Embodiment II, reference may be made to relevant descriptions about other embodiments herein, which will not be repeated herein.

### Embodiment III

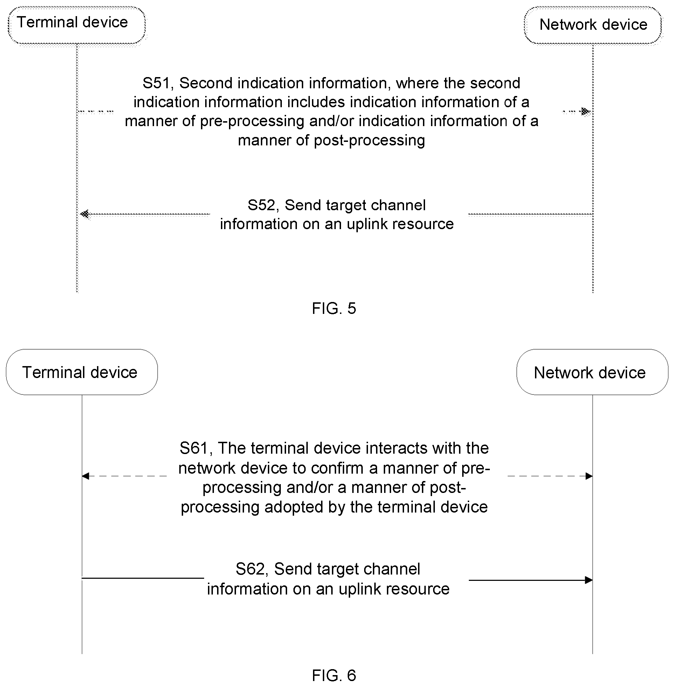

Referring to FIG. 5, FIG. 5 is a schematic diagram of signaling interaction of a second communication method of the embodiments of the present disclosure. As shown in FIG. 5, the method shown in FIG. 5 may include S51 and S52.

In S51, a terminal device sends second indication information to a network device, where the second indication information includes: indication information of a manner of the pre-processing and/or indication information of a manner of the post-processing. Correspondingly, the network device receives the second indication information.

Herein, the terminal device may perform S51 before generating the target channel information, or the terminal device may also perform S51 after generating the target channel information, which is not limited to the present embodiment.

In the solution of the embodiments of the present disclosure, the second indication information may be used for instructing to the network device which manner of the pre-processing the terminal device performs and/or instructing to the network device which manner of the post-processing the terminal device performs.

It should be noted that, S51 is an optional step.

In S52, the terminal device sends target channel information to the network device on an uplink resource. Correspondingly, the network device receives the target channel information on the uplink resource.

It should be noted that, the execution orders of S51 and S52 are not limited herein, and S51 may be performed before S52. Alternatively, S51 may also be performed after S52. Alternatively, S51 and S52 may also be performed simultaneously. For example, both the first indication information and the target channel information may be carried in a CSI report. In an example, the second indication information is carried in a CSI part 1 of the CSI report.

From the above, in the solution of Embodiment III, the terminal device instructs the adopted manner of the pre-processing and/or manner of the post-processing to the network device through the second indication information, and the network device learns the manner of the pre-processing and/or the manner of the post-processing adopted by the terminal device based on the second indication information. Thereby, the manner of the pre-processing and the manner of the post-processing adopted by the terminal device is visible to the network device. The network device, after receiving the target channel information, may recover the target channel information by adopting a corresponding processing manner.

For more contents about Embodiment III, reference may be made to relevant descriptions about other embodiments herein, which will not be repeated herein.

### Embodiment IV

Referring to FIG. 6, FIG. 6 is a schematic diagram of signaling interaction of a third communication method of the embodiments of the present disclosure. As shown in FIG. 6, the method shown in FIG. 6 may include S61 and S62.

In S61, a terminal device interacts with a network device, to confirm the manner of the pre-processing and/or the manner of the post-processing adopted by the terminal device.

Exemplarily, S61 may be performed in a functionality identification process of the first model or in a model identification process of the first model.

As a possible implementation, the network device may send first indication information to the terminal device, and in response to receiving the first indication information, the terminal device may send a response to the first indication information to the network device. Thereby, the terminal device and the network device reach an agreement on the manner of the pre-processing and/or the manner of the post-processing adopted by the terminal device.

As another possible implementation, the terminal device may send second indication information to the terminal device, and the network device may send a response to the second indication information to the terminal device. For example, the network device may send a response to the second indication information, to indicate confirmation of the manner of the pre-processing and/or the manner of the post-processing indicated by the second indication information. For another example, the network device may indicate the manner of the pre-processing and/or the manner of the post-processing in the response to the second indication information, and the manner of the pre-processing and/or the manner of the post-processing indicated by the response to the second indication information is different from that indicated by the second indication information. The terminal device, after receiving the response to the second indication information, may follow the contents indicated by the response to the second indication information. Thereby, the terminal device and the network device reach an agreement on the manner of the pre-processing and/or the manner of the post-processing adopted by the terminal device.

S61 may be performed before S62. After performing S61, the terminal device may determine the manner of the pre-processing and/or the manner of the post-processing to be adopted in subsequent channel information feedback.

It should be noted that, S61 is an optional step.

In S62, the terminal device sends target channel information to the network device on an uplink resource. Correspondingly, the network device receives the target channel information on the uplink resource.

From the above, in the solution of Embodiment IV, the terminal device and the network device reach an agreement on the manner of the pre-processing and/or the manner of the post-processing adopted by the terminal device through interaction. Thereby, the manner of the pre-processing and/or the manner of the post-processing adopted by the terminal device is visible to the network device. The network device, after receiving the target channel information, may recover the target channel information by adopting a corresponding processing manner.

For more contents about Embodiment IV, reference may be made to relevant descriptions about other embodiments herein, which will not be repeated herein.

### Embodiment V

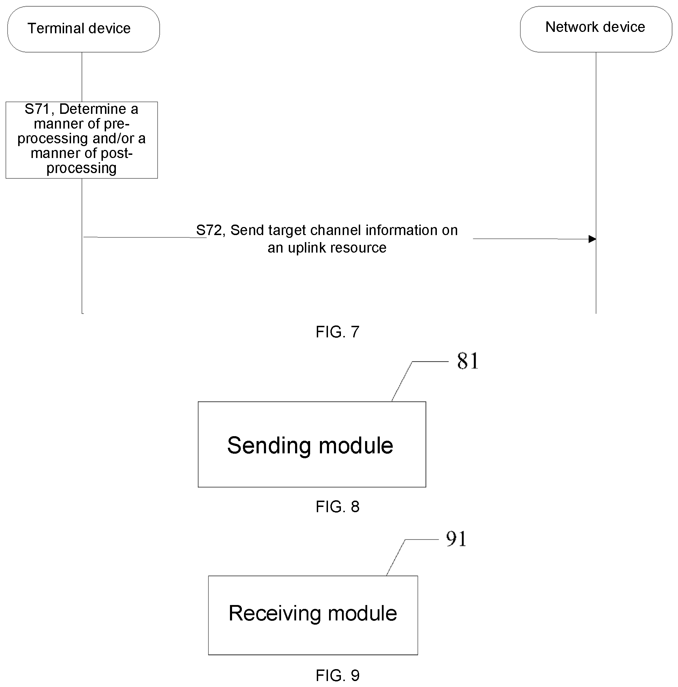

Referring to FIG. 7, FIG. 7 is a schematic diagram of signaling interaction of a fourth communication method of the embodiments of the present disclosure. As shown in FIG. 7, the method shown in FIG. 7 may include S71 and S72.

In S71, a terminal device determines a manner of the pre-processing and/or a manner of the post-processing.

As a possible implementation, the manner of the pre-processing and/or the manner of the post-processing adopted by the terminal device may be defined by a protocol. Thereby, the terminal device may determine the manner of the pre-processing and/or the manner of the post-processing to be adopted in channel information feedback based on protocol agreements.

As another possible implementation, the terminal device may determine the manner of the pre-processing and/or the manner of the post-processing based on a condition (or, it may be referred to as an event).

In an example, the condition for determining the manner of the pre-processing and/or the manner of the post-processing may include at least one of: a computing resource of the terminal device being greater than or equal to a first threshold or the computing resource of the terminal device being less than a second threshold. Herein, the first threshold is greater than or equal to the second threshold. Thereby, the terminal device may determine the adopted pre-processing and/or post-processing based on its own computing resource. Herein, the first threshold and/or the second threshold may be configured by the network device, or may be defined by a protocol.

For example, if the computing resource of the terminal device is less than the second threshold (that is, the computing resource of the terminal device is limited), the manner of the pre-processing adopted by the terminal device may be truncation processing or padding processing, and/or the manner of the post-processing may be discarding processing. If the computing resource of the terminal device is greater than the first threshold (that is, the computing resource of the terminal device is sufficient), the manner of the pre-processing adopted by the terminal device may be adaptive processing, and/or the manner of the post-processing adopted by the terminal device may be adaptive processing.

In another example, the condition for determining the manner of the pre-processing and/or the manner of the post-processing may include at least one of: a time interval between a first time unit and a second time unit being greater than or equal to a third threshold or the time interval between the first time unit and the second time unit being less than a fourth threshold. Herein, the third threshold and/or the fourth threshold may be configured by the network device, or may be defined by a protocol.

Herein, the first time unit refers to: a transmission time unit or a measurement time unit of a reference signal for measuring channel information, and the second time unit being a sending time unit of the target channel information. It should be noted that, a time unit herein may refer to a symbol, a slot, a frame, a subframe, etc., but is not limited thereto.

For example, if the time interval between the first time unit and the second time unit is less than the fourth threshold, the manner of the pre-processing adopted by the terminal device may be truncation processing/padding processing, and/or the manner of the post-processing may be discarding processing. If the time interval between the first time unit and the second time unit is greater than the third threshold, the manner of the pre-processing adopted by the terminal device may be adaptive processing, and/or the manner of the post-processing adopted by the terminal device may be adaptive processing. In a specific implementation, the above condition for determining the manner of the pre-processing and/or the manner of the post-processing may be defined by the protocol, or may be configured by the network device.

In other embodiments, the terminal device may determine the manner of the pre-processing and/or the manner of the post-processing by adopting the solutions described above.

Thereby, the terminal device may perform processing by adopting the determined manner of the pre-processing and/or manner of the post-processing, to obtain the target channel information.

In S72, the terminal device sends target channel information to the network device on an uplink resource. Correspondingly, the network device receives the target channel information on the uplink resource.

For more contents about Embodiment V, reference may be made to the relevant descriptions about Embodiment I to Embodiment IV above, which will not be repeated herein.

It should be understood that, the above various embodiments may be used separately, or may be used in combination with each other, to implement different technical effects.

It can be understood that, in a specific implementation, the above method may be implemented in the form of software program, and the software program is executed in a processor integrated inside a chip or a chip module; or the method may be implemented in the form of hardware or a combination of software and hardware, for example, may be implemented by a dedicated chip or a chip module, or may be implemented by a dedicated chip or a chip module in combination with a software program.

Referring to FIG. 8, FIG. 8 is a structural schematic diagram of a communication apparatus of the embodiments of the present disclosure. The communication apparatus shown in FIG. 8 may be deployed in the above terminal device, and the apparatus shown in FIG. 8 may include: a sending module 81;

the sending module 81, configured to send target channel information on an uplink resource, where the target channel information is obtained based on compression processing and/or first processing of a first model, and the first processing includes: pre-processing and/or post-processing.

In a specific implementation, the communication apparatus shown in FIG. 8 may correspond to a chip with a communication function in the terminal device; or correspond to a terminal device including a chip or a chip module with a communication function, or correspond to the terminal device.

Referring to FIG. 9, FIG. 9 is a structural schematic diagram of another communication apparatus of the embodiments of the present disclosure. The communication apparatus shown in FIG. 9 may be deployed in the above network device, and the apparatus shown in FIG. 9 may include: a receiving module 91, herein,
the receiving module 91, configured to receive target channel information on an uplink resource, where the target channel information is obtained based on compression processing and/or first processing of a first model, and the first processing includes: pre-processing and/or post-processing.

In a specific implementation, the communication apparatus shown in FIG. 9 may correspond to a chip with a communication function in the network device; or correspond to the network device including a chip or a chip module with a communication function, or correspond to the network device.

For more contents about operating principles, working methods, beneficial effects, etc. of the communication apparatus in the embodiments of the present disclosure, references may be made to the relevant descriptions about the communication method above, which will not be repeated herein.

The embodiments of the present disclosure further provide a computer readable storage medium, the computer readable storage medium has stored a computer program thereon, and the computer program, upon being executed by a processor, perform the above communication method. The storage medium may include an ROM, an RAM, a magnetic disk, or an optical disc, etc. The storage medium may further include a non-volatile memory or a non-transitory memory, etc.

The embodiments of the present disclosure further provide a communication apparatus, including a memory and a processor, the memory stores a computer program thereon that is executable on the processor, and the processor, upon executing the computer program, performs the steps of the above communication method. The communication apparatus may be the network device above, or may be the terminal device above.

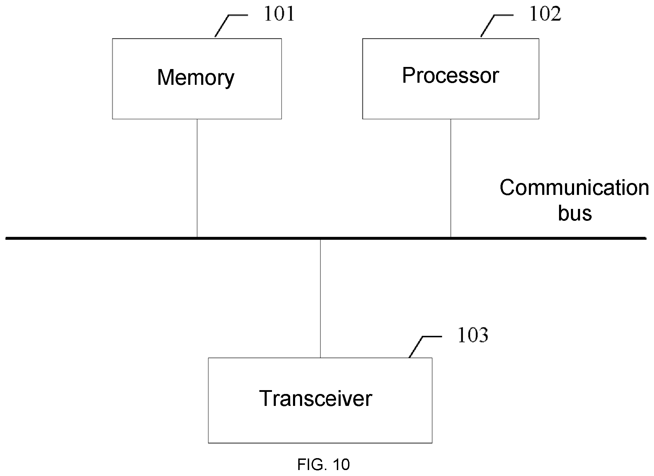

Referring to FIG. 10, FIG. 10 is a schematic diagram of a hardware structure of a communication apparatus of the embodiments of the present disclosure. The communication apparatus shown in FIG. 10 may be the network device above, or may be the terminal device above. The communication apparatus shown in FIG. 10 includes a memory 101, a processor 102, and a transceiver 103, the processor 102 is coupled to the memory 101 and the transceiver 103, and the memory 101 may be located within the communication apparatus, or may be located outside the communication apparatus. The memory 101, the processor 102, and the transceiver 103 may be connected via a communication bus. The transceiver 103 is used to communicate with other devices. The memory 101 stores a computer program thereon that is executable on the processor 102, and the processor 102, upon executing the computer program, performs the steps in the methods provided in the above embodiments, and/or, the processor 102, upon executing the computer program, enables the transceiver 103 to perform the steps in the methods provided in the above embodiments.

It should be understood that, in the embodiments of the present disclosure, the processor may be a central processing unit (CPU), and the processor may also be other general-purpose processors, digital signal processors (DSPs), application specific integrated circuits (ASICs), field programmable gate arrays (FPGA) or other programmable logic devices, discrete gate or transistor logic devices, discrete hardware components, etc. The general-purpose processor may be a microprocessor, or the processor may also be any conventional processor, etc.

It should also be understood that, the memory in the embodiments of the present disclosure may be a volatile memory or a non-volatile memory, or may include both volatile memory and non-volatile memory. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), which is used as an external cache. By way of exemplary but not restrictive illustration, many forms of random access memory (RAM) are available, such as a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced SDRAM (ESDRAM), a synchlink DRAM (SLDRAM), and a direct rambus RAM (DR RAM).

All or a part of the above embodiments may be implemented through software, hardware, firmware, or any other combinations. When implemented in software, all or a part of the above embodiments may be implemented in the form of a computer program product. The computer program product includes one or more computer instructions or one or more computer programs. When the computer instructions or the computer program is loaded or executed on a computer, all or a part of the processes or functions according to the embodiments of the present disclosure are generated. The computer may be a general-purpose computer, a special-purpose computer, a computer network, or other programmable apparatuses. The computer program may be stored in a computer readable storage medium, or transmitted from a computer readable storage medium to another computer readable storage medium, for example, the computer program may be transmitted from a website, a computer, a server, or a data center to another website, another computer, another server, or another data center in a wired manner or wireless manner.

It should be understood that, in various embodiments of the present disclosure, the size of the serial numbers of the above processes does not mean the order of execution, and the execution orders of respective processes should be determined by their functions and internal logic, and should not constitute any limitation on the implementation process of the embodiments of the present disclosure.

In the several embodiments provided in the present disclosure, it should be understood that, the disclosed methods, apparatuses, and systems may be implemented in other ways. For example, the apparatus embodiments described above are merely schematic; for example, the division of the units is only a logical functional division, and there may be other division manners in actual implementation; for example, a plurality of units or components may be combined or may be integrated into another system, or some features may be ignored, or not performed. As another point, the displayed or discussed mutual coupling or direct coupling or communication connection may be indirect coupling or communication connection through some interfaces, apparatuses or units, and may be in electrical, mechanical, or other forms.

The units described as separate components may or may not be physically separated, and components displayed as units may or may not be physical units, that is, may be located in a place, or may be distributed to a plurality of network units. A part or all of the units may be selected according to actual needs to implement the objectives of the solutions of the present embodiment.

In addition, respective functional units in various embodiments of the present disclosure may be integrated into a processing unit, may also be respective units existing physically separately, or two or more units may be integrated into a unit. The above integrated unit may be implemented in the form of hardware, or may also be implemented in the form of hardware plus software functional units. For example, with regard to various apparatuses or products applied to or integrated into a chip, various modules/units contained therein may all be implemented by means of hardware such as a circuit, etc.; or at least part of the modules/units may be implemented by means of a software program, and the software program is executed on a processor integrated in the chip, and the remaining (if any) modules/units may be implemented by means of hardware such as a circuit, etc. For various apparatuses and products applied to or integrated into a chip module, various modules/units contained therein may all be implemented by means of hardware such as circuit, etc., and different modules/units may be located in a same component (e.g., chip, circuit module, etc.) or different components of the chip module. Alternatively, at least part of the modules/units may be implemented by means of a software program, and the software program is executed on a processor integrated into the chip module, and the remaining (if any) of the modules/units may be implemented by means of hardware such as circuit, etc. For various apparatuses and products applied to or integrated into a terminal device, various modules/units contained therein may all be implemented by means of hardware such as circuit, etc., and different modules/units may be located in a same component (e.g., chip, circuit module, etc.) or different components of the terminal device. Alternatively, at least part of the modules/units may be implemented by means of a software program, and the software program is executed on a processor integrated into the terminal device, and the remaining (if any) of the modules/units may be implemented by means of hardware such as circuit, etc.

The above integrated unit implemented in the form of the software functional unit may be stored in a computer readable storage medium. The above software functional unit is stored in a storage medium, and includes a number of instructions for enabling a computer device (which may be a personal computer, a server, or a network device, etc.) to perform a part of the steps of the methods described in the various embodiments of the present disclosure. And the aforementioned storage medium includes: a USB flash drive, a removable hard disk, a read-only memory (Read-Only Memory, ROM), a random access memory (Random Access Memory, RAM), a magnetic disk, or an optical disc, and other various media that may store program codes.

Although the present disclosure is disclosed as above, the present disclosure is not limited thereto. Any person skilled in the art may make various changes and modifications without departing from the spirit and scope of the present disclosure. Therefore, the protection scope of the present disclosure should be subject to the scope defined by the claims.

## Claims

1. A communication method, **characterized in that** the method comprises:
sending target channel information on an uplink resource, wherein the target channel information is obtained based on compression processing and/or first processing of a first model, and the first processing comprises: pre-processing and/or post-processing.

2. The communication method according to claim 1, wherein the method further comprises:
receiving first indication information, wherein the first indication information comprises: indication information of a manner of the pre-processing and/or indication information of a manner of the post-processing.

3. The communication method according to claim 1, wherein the method further comprises:
sending second indication information, wherein the second indication information comprises: indication information of a manner of the pre-processing and/or indication information of a manner of the post-processing.

4. The communication method according to claim 3, wherein the second indication information is carried in a channel state information (CSI) part 1 of a CSI report.

5. The communication method according to claim 1, wherein the manner of the pre-processing and/or the manner of the post-processing is predefined by a protocol.

6. The communication method according to claim 1, wherein the manner of the pre-processing and/or the manner of the post-processing is determined based on a satisfied condition.

7. The communication method according to claim 6, wherein the condition comprises at least one of:
a computing resource of a terminal device being greater than or equal to a first threshold;
the computing resource of the terminal device being less than a second threshold;
a time interval between a first time unit and a second time unit being greater than or equal to a third threshold, wherein the first time unit refers to: a transmission time unit or a measurement time unit of a reference signal for measuring channel information, and the second time unit is a sending time unit of the target channel information; or
the time interval between the first time unit and the second time unit being less than a fourth threshold.

8. The communication method according to claim 1, wherein the pre-processing is any one or more of following manners:
performing adaptive processing on first channel information, to obtain channel information input to the first model;
performing truncation or padding on the first channel information, to obtain the channel information input to the first model;
performing grouping on the first channel information based on a channel resource and/or an antenna port, to obtain the channel information input to the first model, wherein the channel information input to the first model comprises a plurality of pieces of second channel information, and a size of each piece of second channel information is an input size; or
adjusting a size of a channel resource corresponding to the first channel information, to obtain the channel information input to the first model.

9. The communication method according to claim 1, wherein the post-processing is any one or more of following manners:
performing adaptive processing on channel information output by the first model, to obtain the target channel information, wherein a size of the target channel information is matched with a size of an uplink resource;
performing truncation or padding on the channel information output by the first model, to obtain the target channel information; or
discarding at least one piece of third channel information, to obtain the target channel information, wherein the channel information output by the first model comprises a plurality of pieces of the third channel information.

10. The communication method according to claim 9, wherein the post-processing is: discarding the at least one piece of third channel information according to priorities of the plurality of pieces of third channel information.

11. The communication method according to claim 10, wherein the priorities of the plurality of pieces of third channel information are determined based on at least one of:
index information of a channel resource corresponding to the third channel information;
index information of an antenna port corresponding to the third channel information; or
index information of a layer corresponding to the third channel information.

12. A communication method, **characterized in that** the method comprises:
receiving target channel information on an uplink resource, wherein the target channel information is obtained based on compression processing and/or first processing of a first model, and the first processing comprises: pre-processing and/or post-processing.

13. The communication method according to claim 12, wherein the method further comprises:
sending first indication information, wherein the first indication information comprises: indication information of a manner of the pre-processing and/or indication information of a manner of the post-processing.

14. The communication method according to claim 12, wherein the method further comprises:
receiving second indication information, wherein the second indication information comprises: indication information of a manner of the pre-processing and/or indication information of a manner of the post-processing.

15. The communication method according to claim 14, wherein the second indication information is carried in a channel state information (CSI) part 1 of a CSI report.

16. The communication method according to claim 12, wherein the manner of the pre-processing and/or the manner of the post-processing is predefined by a protocol.

17. The communication method according to claim 12, wherein the manner of the pre-processing and/or the manner of the post-processing is determined based on a satisfied condition.

18. The communication method according to claim 17, wherein the condition comprises at least one of:
a computing resource of a terminal device being greater than or equal to a first threshold;
the computing resource of the terminal device being less than a second threshold;
a time interval between a first time unit and a second time unit being greater than or equal to a third threshold, wherein the first time unit refers to: a transmission time unit or a measurement time unit of a reference signal used for measuring channel information, and the second time unit is a sending time unit of the target channel information; or
the time interval between the first time unit and the second time unit being less than a fourth threshold.

19. The communication method according to claim 12, wherein the pre-processing is any one or more of following manners:
performing adaptive processing on first channel information, to obtain channel information input to the first model;
performing truncation or padding on the first channel information, to obtain the channel information input to the first model;
performing grouping on the first channel information based on a channel resource and/or an antenna port, to obtain the channel information input to the first model, wherein the channel information input to the first model comprises a plurality of pieces of second channel information, and a size of each piece of second channel information is the input size; or
adjusting a size of a channel resource corresponding to the first channel information, to obtain the channel information input to the first model.

20. The communication method according to claim 12, wherein the post-processing is any one or more of following manners:
performing adaptive processing on channel information output by the first model, to obtain the target channel information, wherein a size of the target channel information is matched with a size of an uplink resource;
performing truncation or padding on the channel information output by the first model, to obtain the target channel information; or
discarding at least one piece of third channel information, to obtain the target channel information, wherein the channel information output by the first model comprises a plurality of pieces of the third channel information.

21. The communication method according to claim 20, wherein the post-processing is: discarding the at least one piece of third channel information according to priorities of the plurality of pieces of third channel information.

22. The communication method according to claim 21, wherein the priorities of the plurality of pieces of third channel information are determined based on at least one of:
index information of a channel resource corresponding to the third channel information;
index information of an antenna port corresponding to the third channel information; or
index information of a layer corresponding to the third channel information.

23. A communication apparatus, **characterized in that** the apparatus comprises:
a sending module, configured to send target channel information on an uplink resource, wherein the target channel information is obtained based on compression processing and/or first processing of a first model, and the first processing comprises: pre-processing and/or post-processing.

24. A communication apparatus, **characterized in that** the apparatus comprises:
a receiving module, configured to send target channel information on an uplink resource, wherein the target channel information is obtained based on compression processing and/or first processing of a first model, and the first processing comprises: pre-processing and/or post-processing.

25. A computer readable storage medium, the computer readable storage medium has stored a computer program thereon, **characterized in that** the computer program, upon being executed by a processor, enables the communication method according to any one of claims 1 to 11 or the communication method according to any one of claims 12 to 22 to be performed.

26. A communication apparatus, **characterized by** comprising a memory and a processor, the memory has stored a computer program thereon that is executable on the processor, wherein the processor, upon executing the computer program, performs steps of the communication method according to any one of claims 1 to 11.

27. A communication apparatus, comprising a memory and a processor, the memory has stored a computer program thereon that is executable on the processor, wherein the processor, upon executing the computer program, performs steps of the communication method according to any one of claims 12 to 22.
